# EUROPÄISCHE PATENTSCHRIFT

(11) **EP 1 592 911 B1**
(45) Veröffentlichungstag und Bekanntmachung des Hinweises auf die Patenterteilung: **23.07.2008**
(21) Anmeldenummer: 04705421.8
(22) Anmeldetag: 27.01.2004
(51) Int. Cl.: F16L 37/084

(54) **LÖSBARE STECKVERBINDUNG FÜR HOCHDRUCKLEITUNGEN**
REMOVABLE PLUG-IN CONNECTION FOR HIGH-PRESSURE LINES
RACCORD ENFICHABLE AMOVIBLE POUR CONDUITES HAUTE PRESSION

(30) Priorität: 31.01.2003 DE 10304074
(43) Veröffentlichungstag der Anmeldung: 09.11.2005
(73) Patentinhaber: A. RAYMOND ET CIE, 38000 Grenoble (FR)
(72) Erfinder: MORETTI, Erminio, F-38000 Grenoble (FR); MARTIN-COCHER, Daniel, 38950 Saint Martin de Vinoux (FR); RAYMOND, Albert, F-38640 Claix (FR)
(74) Vertreter: Rüttgers, Joachim
(86) Internationale Anmeldenummer: PCT/EP2004/000723
(87) Internationale Veröffentlichungsnummer: WO 2004/068020

(56) Entgegenhaltungen:
- EP-A- 0 618 394
- EP-A- 0 905 430
- US-A- 5 425 558
- US-A- 5 887 911

## Beschreibung

Die Erfindung betrifft eine Steckverbindung gemäß dem Oberbegriff des Patentanspruchs.

Eine derartige Steckverbindung ist aus US 5,425,558 A bekannt. Die gattungsgemäße Steckverbindung für Hochdruckleitungen, insbesondere für Bremsleitungen im Kraftfahrzeugbau, besteht aus einem zylindrischen Aufnahmegehäuse mit einem zentralen Aufnahmeraum zum Einführen eines mit einer umlaufenden Halterippe versehenen, rohrförmigen Einsteckteils sowie mit einem erweiterten Aufnahmeraum an der Einführseite zum Einbetten von mehreren radial geführten Verriegelungselementen, die durch einen Federring in Richtung des Innenraums vorgespannt sind. Die Verriegelungselemente weisen nach innen weisende Rastkeile mit Rastflächen aufweisen, welche die Halterippe nach dem Einführen des Einsteckteils formschlüssig hintergreifen, und bestehen aus zwei separaten Halbschalen, die durch den Federring zusammengehalten werden. Die den erweiterten Aufnahmeraum umgebende Wand ist nach dem Einbetten der Halbschalen an deren Vorderkante schräg zur Achse des Aufnahmegehäuses so weit nach innen gebogen ist, daß die Halterippe ungehindert hindurch treten kann und die Halbschalen beim Einführen des Einsteckteils frei nach außen ausweichen können.

Aus EP 0 905 430 A2 ist eine lösbare Steckverbindung bekannt, die über zwei in radialer Richtung gegeneinander verschiebbare Verriegelungselemente verfügt, um eine Halterippe eines Einsteckteiles zu hintergreifen. Jedes Verriegelungselement liegt mit einem Anlageabschnitt in einem einseitig geschlossenen gestuften Teil des anderen Verriegelungselementes, um die Führung zu verbessern.

Aus DE 37 34 948 A1 ist eine Steckverbindung für Hochdruckleitungen, insbesondere für Bremsleitungen im Kraftfahrzeugbau, bekannt. Sie besteht aus einem zylindrische Aufnahmegehäuse mit einem zentralen Aufnahmeraum zum Einführen eines mit einer umlaufenden Halterippe versehenen, rohrförmigen Einsteckteils, sowie mit einem erweiterten Aufnahmeraum an der Einführseite zum Einbetten von Verriegelungselementen mit nach innen weisenden Rastkeilen, die durch einen umgreifenden separaten Haltering aus Federstahl in Richtung des Innenraums vorgespannt sind. Die Rastkeile werden beim Einführen des Einsteckteils von dessen Halterippe gegen die Federkraft auseinander gedrückt und nach dem vollständigen Eindringen des Einsteckteils wieder zusammengeführt, so daß die zum Innenraum weisenden Rastflächen die Halterippe auf deren Rückseite formschlüssig hintergreifen. Bei dieser bekannten Steckverbindung sind drei durch ein elastisches Band zusammengehaltene Rastkeile in dem erweiterten Aufnahmeraum einer separaten Bundhülse eingebettet, welche mit dem Aufnahmegehäuses nach dem Einbetten der Rastkeile verbunden wird. Zur Herstellung der Verbindung kann die Bundhülse an ihrem Hülsenende entweder mit einem Innengewinde versehen sein, welches auf ein am Gehäuse befindliches Außengewinde aufgeschraubt wird, oder die Hülse ist an ihrem hinteren Ende mit einem angeformten Innenring versehen, der beim Zusammenbau mit dem Gehäuse in eine entsprechende Rille einrastet. Durch die zweiteilige Ausbildung des Aufnahmegehäuses gestaltet sich der Zusammenbau sehr umständlich und kostet daher für einen Massenartikel relativ viel Geld. Auch ist handwerkliches Geschick erforderlich, um die drei Rastkeile zum Umwickeln des elastischen Bandes zusammenzuhalten und in diesen lockeren Verbund in den erweiterten Aufnahmeraum der Bundhülse einzubetten.

Aufgabe der Erfindung ist es, die vorgenannte Steckverbindung so zu gestalten, daß die Herstellung des Aufnahmegehäuses vereinfacht und die Montage der Rastkeile dadurch erleichtert wird.

Diese Aufgabe wird bei einer Steckverbindung der eingangs genannten Art erfindungsgemäß mit den kennzeichnenden Merkmalen des Patentanspruches 1 gelöst.

Dadurch, dass bei der erfindungsgemäßen Steckverbindung die Zentrierstifte in in axialer Richtung beidseitig geschlossene Aussparungen eingreifen, sind die Verriegelungselemente gegeneinander in axialer Richtung fixiert, so dass bei einem gewissen axialen Spiel der Verriegelungselemente in dem zentralen Aufnahmeraum sich diese als eine kompakte Einheit gemeinsam bewegen und damit sichergestellt ist, dass der Hintergriff der Halterippe des Einsteckteiles erhalten bleibt.

Die Halbschalen werden zweckmäßigerweise als zwei gleiche Teile in hermaphroditischer Form hergestellt und sind an den vorderen Außenkanten mit einer konischen Stützfläche unter dem gleichen Winkel abgeschrägt wie die Vorderkante der Gehäusewand, wodurch eine vollkommene Abstützung der Halbschalen an der nach innen gebördelten Vorderkante erreicht wird. Zum Umbördeln der Vorderkante ist es von Vorteil, wenn das Gehäuse aus einem plastisch leicht deformierbaren Spritzgußmetall besteht.

In der Zeichnung ist eine bevorzugte Ausführungsform der Erfindung dargestellt und soll nachfolgend näher erläutert werden. Es zeigt:
- Fig. 1: Das Aufnahmegehäuse der Steckverbindung im Längsschnitt,
- Fig. 2: Die zusammengebauten Halbschalen mit Führungsring vor dem Einbau in den erweiterten Aufnahmeraum,
- Fig. 3: Das Aufnahmegehäuse mit eingebetteten Halbschalen nach dem Umbördeln der Vorderkante,
- Fig. 4: Das Einsteckteil vor dem Einführen in das Kupplungsgehäuse,
- Fig. 5: Das Einsteckteil während des Einführens in das Kupplungsgehäuse,
- Fig. 6: Das Einsteckteil nach dem vollständigen Einführen in das Kupplungsgehäuse,
- Fig. 7: Die obere und untere Halbschale in Seitenansicht,
- Fig. 8: Die obere und untere Halbschale in Vorderansicht,
- Fig. 9: Die untere Halbschale in Draufsicht und
- Fig. 10: Die beiden zusammengefügten Halbschalen in Seitenansicht mit Teilschnitt durch die Zentrierstifte.

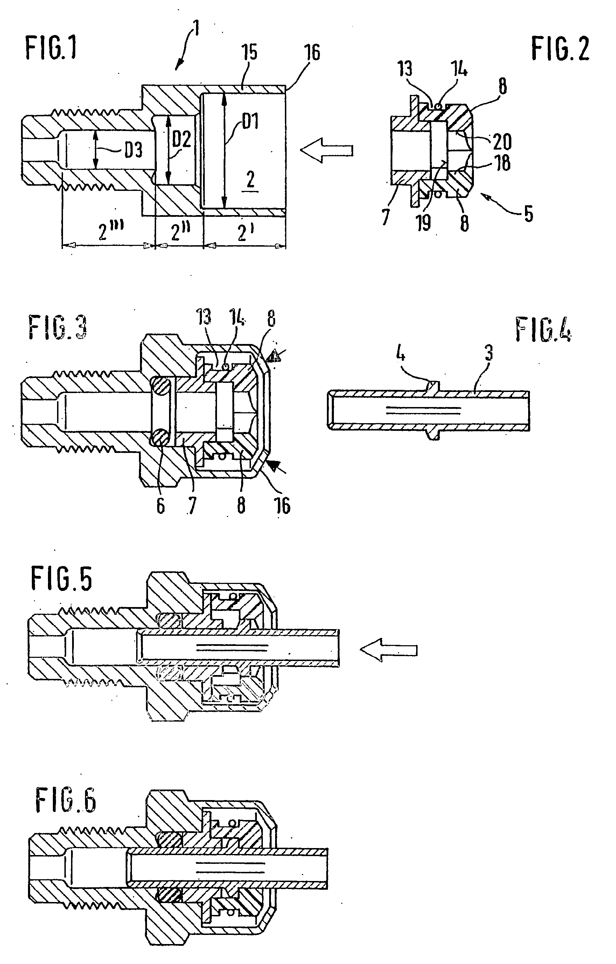

Die in den Figuren dargestellte Steckverbindung besteht aus einem zylindrischen Aufnahmegehäuse 1 mit einem in mehreren Stufen abgesetzten zentralen Aufnahmeraum 2 (vgl. Fig.1) und einem rohrförmigen Einsteckteil 3 mit einer kurz vor dessen Ende ausgeformten, umlaufenden Halterippe 4 (vgl. Fig.4). Das Einsteckteil 3 ist im vorliegenden Ausführungsbeispiel das Ende eines stabilen Metallrohres, welches beispielsweise für Bremsleitungen verwendet wird.

Das Gehäuse 1 besitzt an seinem vorderen, einführseitigen Bereich einen erweiterten Aufnahmeraum 2' mit einem Innendurchmesser D1 zum Einbetten von radial geführten Verriegelungselementen 5 und daran anschließend einen zweiten abgesetzten Aufnahmeraum 2" mit einem Durchmesser D2 zum Einlagern eines Dichtringes 6 und einer Führungshülse 7 für das Einsteckteil 3. Dem folgt ein nochmals abgesetzter Aufnahmeraum 2'" mit einem Durchmesser D3, welcher zur unmittelbaren Aufnahme des Einsteckteils 3 dient.

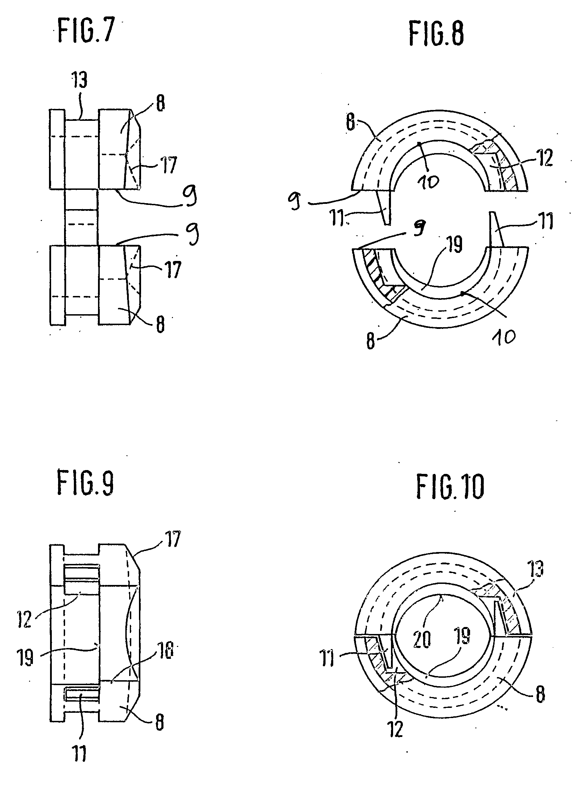

Die erfindungsgemäße Ausbildung der Verriegelungselemente 5 ist aus den Figuren 7 bis 10 erkennbar. Diese Verriegelungselemente 5 bestehen aus zwei aus Kunststoff geformten hermaphroditisch ausgebildeten Halbschalen 8, welche durch gegenseitiges Berühren der Stirnflächen 9 zu einem Ring zusammengefügt werden. Um das Zusammenfügen zu erleichtern, weist jede Halbschale 8 an ihrer einen Stirnfläche 9 einen in Verlängerung der Innenwand 10 vorstehenden Zentrierstift 11 und an ihrer anderen Stirnfläche 9 eine entsprechende Aussparung 12 auf, wobei die Zentrierstifte 11 beim Zusammenfügen der Halbschalen 8 in die jeweils gegenüber liegende Aussparung 12 eingreifen.

Die Halbschalen 8 besitzen an ihrer Außenwand eine umlaufende Nut 13, welche zur Aufnahme eines die Halbschalen 8 umgreifenden, vorzugsweise spiralförmig gebogenen Federringes 14 dient, welcher aus elastischem Federstahl gebogen ist. Nach Einlegen dieses Federringes 14 werden die Halbschalen 8 gegeneinander gespannt und können problemlos zusammen mit der Führungshülse 7 als Einheit (vgl. Fig.2) in den vorderen Aufnahmeraum eingeführt werden, wobei vorher noch der Dichtring 6 einzuführen ist.

Das Aufnahmegehäuse 1 ist im einführseitigen Bereich von einer plastisch leicht deformierbaren Wand 15 umgeben, welche nach dem Einbetten der Führungshülse 7 und der Halbschalen 8 an deren Vorderkante 16 schräg zur Gehäuseachse nach innen umgebogen wird, uns zwar soweit, daß die Halbschalen 8 entgegen der Einsteckrichtung gehalten sind, aber beim Einführen des Einsteckteils 3 frei nach außen ausweichen können (vgl. Fig. 3).

Die Halbschalen 8 besitzen an ihrer Innenseite nach innen gerichtete Rastkeile 18 mit in Einführrichtung weisenden Rastflächen 19, welche nach dem Einführen des Einsteckteils 3 die Halterippe 4 formschlüssig hintergreifen. Die Halbschalen 8 besitzen ferner an ihren einführseitigen Außenkanten konische Stützflächen 17, welche zur Gehäuseachse unter dem gleichen Winkel abgeschrägt sind wie die Vorderkante 16 der Außenwand 15.

Die Bewegung der Halbschalen 8 beim Einführen des Einsteckteils 3 in den Aufnahmeraum 2'" ist in den Figuren 5 und 6 anschaulich dargestellt. Zunächst werden die Halbschalen 8 beim Auftreffen der Halterippe 4 auf die Rastkeile 18 gegen die Federkraft des Federringes 14 auseinander gedrückt. Sobald die Halterippe 4 die Innenkanten 20 der Rastkeile 18 passiert hat, bewegen sich die Halbschalen 8 wieder in ihre Ausgangslage zurück und hintergreifen dabei mit den Rastflächen 19 die Halterippe 4, so daß die Kupplung fest verschlossen ist. Durch die nach innen gebördelte Vorderkante 16 und die konischen Stützflächen 17 ist gewährleistet, daß die Halbschalen 8 auch bei hohen Zugkräften, welche beim Durchfluß der Bremsflüssigkeit durch das Kupplungsgehäuse 1 auf das Einsteckteil 3 einwirken, sicher im Kupplungsgehäuse 1 gehalten werden.

## Patentansprüche

1. Lösbare Steckverbindung für Hochdruckleitungen, insbesondere für Bremsleitungen im Kraftfahrzeugbau, bestehen aus mehreren radial geführten Verriegelungselementen (5) und aus einem zylindrischen Aufnahmegehäuse (1) mit einem zentralen Aufnahmeraum (2) zum Einführen eines mit einer umlaufenden Halterippe (4) versehenen, rohrförmigen Einsteckteils (3), sowie mit einem erweiterten Aufnahmeraum (1') an der Einführseite zum Einbetten der radial geführten Verriegelungselementen (5), die durch einen Federring (14) in Richtung des Innenraums vorgespannt sind, wobei die Verriegelungselemente (5) nach innen weisende Rastkeile (18) mit Rastflächen (19) aufweisen, welche die Halterippe (4) nach dem Einführen des Einsteckteils (3) formschlüssig hintergreifen, sowie aus zwei Halbschalen (8) bestehen, die durch den Federring (14) zusammengehalten werden, und wobei die den erweiterten Aufnahmeraum (1') umgebende Wand (15) nach dem Einbetten der Halbschalen (8) an deren Vorderkante (16) schräg zur Achse des Aufnahmegehäuses (1) soweit nach innen gebogen ist, daß die Halterippe (4) ungehindert hindurch treten kann und die Halbschalen (8) beim Einführen des Einsteckteils (3) frei nach außen ausweichen können, **dadurch gekennzeichnet, daß** jede Halbschale (8) an der einen Stirnfläche (9) in Verlängerung der Innenwand (10) einen vorstehenden Zentrierstift (11) aufweist, der beim Zusammenfügen der beiden Halbschalen (8) in eine entsprechende in axialer Richtung beidseitig von der Halbschale geschlossene Aussparung (12) an der anderen Stirnfläche (9) der anderen Halbschale eingreift.

2. Lösbare Steckverbindung nach Anspruch 1, **dadurch gekennzeichnet, daß** die beiden Halbschalen (8) die gleiche hermaphroditische Form aufweisen.

3. Lösbare Steckverbindung nach Anspruch 1 oder 2, **dadurch gekennzeichnet, daß** die Halbschalen (8) an den vorderen Außenkanten mit einer konischen Stützfläche (17) unter dem gleichen Winkel abgeschrägt sind wie die Vorderkante (16) der Außenwand (15).

4. Lösbare Steckverbindung nach Anspruch 3, **dadurch gekennzeichnet, daß** das Gehäuse (1) aus plastisch deformierbarem Spritzgußmetall besteht.

## Claims

1. Releasable plug-in connector for high pressure lines, in particular for brake lines in motor vehicle manufacturing, comprising a plurality of radially guided locking elements (5) and a cylindrical receptacle housing (1) with a central receptacle chamber (2) for introducing a tubular plug-in part (3) provided with a peripheral holding rib (4), and with an enlarged receptacle chamber (1') at the introducing side for embedding the radially guided locking elements (5), which are pretensioned with a spring ring (14) in the direction towards the interior, wherein the locking elements (5) have inwardly facing stop wedges (18) with stop faces (19) which engage in interlocking manner behind the holding rib (4) after introduction of the plug-in part (3), and two half shells (8) which are held together by the spring ring (14) and wherein, following embedding of the half shells (8), the wall (15) surrounding the enlarged receptacle chamber (1') is bent inwardly at its front edge (16) obliquely to the axis of the receptacle housing (1) far enough such that the holding rib (4) can pass through unhindered and the half shells (8) can freely deflect outwardly on introduction of the plug-in part (3), **characterised in that**, in extension of the inner wall (10), each half shell (8) has, at the one end face (9) a projecting centring pin (11), which on bringing together the two half shells (8), engages in a corresponding recess (12) at the other end face (9) of the other half shell, said recess being closed in the axial direction on both sides by the half shell.

2. Releasable plug-in connector according to claim 1, **characterised in that** the two half shells (8) have the same hermaphroditic form.

3. Releasable plug-in connector according to claim 1 or 2, **characterised in that** the half shells (8) are bevelled at the front outer edges with a conical support face (17) at the same angle as the front edge (16) of the outer wall (15).

4. Releasable plug-in connector according to claim 3, **characterised in that** the housing (1) is made from plastically deformable injection moulded metal.

## Revendications

1. Système d'accouplement rapide débrochable pour canalisations à haute pression, notamment pour des conduites de circuit de freinage dans la construction automobile, se composant de plusieurs organes de verrouillage (5) orientés dans le plan radial et d'un élément récepteur femelle de forme cylindrique (1) définissant un logement de réception central (2) pour l'introduction d'un élément tubulaire embrochable mâle (3) muni d'une nervure de retenue périphérique (4), ainsi que d'un logement de réception de plus grand diamètre (1') sur son côté introduction pour l'ancrage des organes de verrouillage (5) disposés dans le plan radial, qui sont maintenus par une bague élastique (14) dans un état de précontrainte orientée vers l'intérieur du logement, les organes de verrouillage (5) comportant en l'occurrence des picots d'accrochage (18) orientés vers l'intérieur, munis de faces d'accrochage (19), qui viennent, par l'action mécanique résultant de leur forme, cramponner par derrière la nervure de retenue (4) après l'emmanchement de l'élément embrochable mâle (3), et également se composent de deux demi-coquilles (8) qui sont maintenues en position d'assemblage par la bague élastique (14), et la paroi (15) entourant le logement de réception de plus grand diamètre (1') étant en l'occurrence, après l'ancrage en position des demi-coquilles (8), au niveau de son arête antérieure (16), repliée vers l'intérieur obliquement par rapport à l'axe de l'élément récepteur femelle (1) dans une proportion telle que la nervure de retenue (4) peut traverser celui-ci librement et que les demi-coquilles (8) peuvent, lors de l'introduction de l'élément embrochable mâle (3), s'écarter vers l'extérieur sans difficulté, **caractérisé en ce que** chaque demi-coquille (8) est munie, au niveau d'une de ses faces antérieures (9), dans le prolongement de la paroi intérieure (10), d'une tige de centrage formant saillie (11) qui, lors de l'assemblage des deux demi-coquilles (8), vient s'insérer en prise d'encastrement dans un évidement correspondant (12), défini des deux côtés dans le plan axial par la demi-coquille, au niveau de l'autre face antérieure (9) de l'autre demi-coquille.

2. Système d'accouplement rapide débrochable selon la revendication 1, **caractérisé en ce que** les deux demi-coquilles (8) présentent une configuration hermaphrodite identique.

3. Système d'accouplement rapide débrochable selon les revendications 1 ou 2, **caractérisé en ce que** les demi-coquilles (8) comportent, au niveau de leurs arêtes extérieures antérieures, une face d'appui conique (17), dont l'angle d'inclinaison est identique à celui de l'arête antérieure (16) de la paroi extérieure (15).

4. Système d'accouplement rapide débrochable selon la revendication 3, **caractérisé en ce que** l'élément récepteur femelle (1) est réalisé dans un matériau métallique moulé sous pression susceptible de se déformer plastiquement.
